# EUROPEAN PATENT APPLICATION

(11) **EP 0 603 765 A1**
(43) Date of publication of application: **29.06.1994**
(21) Application number: 93120413.5
(22) Date of filing: 17.12.1993
(51) Int. Cl.: C08J 3/21, C04B 35/52, C08K 7/06

(54) **Process for the manufacture of preformed material for making carbon composite**

(30) Priority: 19.12.1992 JP 355683/92
(71) Applicant: MARUZEN PETROCHEMICAL CO., LTD., Chuo-ku, Tokyo 104 (JP)
(72) Inventor: Imanishi, Akemi, Ichihara-shi, Chiba-ken (JP); Hojyo, Shiro, Funabashi-shi, Chiba-ken (JP); Shigematsu, Hitoshi, Ichihara-shi, Chiba-ken (JP); Naito, Sakae, Chiba-shi, Chiba-ken (JP); Tsuchitani, Masatoshi, Ichihara-shi, Chiba-ken (JP)
(74) Representative: VOSSIUS & PARTNER

(57) **Abstract**

A preformed material for making carbon composites reinforced by short carbon fibers comprising short carbon fibers, a matrix material and a viscosity increasing agent which are homogeneously dispersed, and a process for the manufacturing the same are disclosed. The process comprises stirring and mixing said short carbon fibers and matrix material in a dispersion medium to which said viscosity increasing agent has been added, to obtain a dispersion mixture; molding the dispersion mixture; and drying the molded material to remove the dispersion medium. The preformed material comprises the short carbon fibers and the matrix material in a homogeneously dispersed state, which can be kept in a stable manner, and is easy to handle. Because of the excellent homogeneity, carbon composites reinforced by short carbon fibers which are prepared from the preformed materials have a high bending strength even if their volumetric fiber content is small.

## Description

The present invention relates to a process for the manufacture of a carbon composite reinforced by carbon fibers (hereinafter called C/C composite), especially to a C/C composite reinforced by short fibers, and a preformed material manufactured thereby. In particular, the present invention relates to a process for the manufacture of a preformed material for making a C/C composite reinforced by short carbon fibers in which short fibers are more homogeneously dispersed in matrix than in conventional C/C composites, and to the preformed material manufactured by this process.

C/C composites possess excellent mechanical characteristics, heat resistance, superior corrosion resistance with the exception of oxidation resistance and sliding characteristics. They are useful materials having a wide usage as braking materials, sliding materials, construction materials, and the like of space aerocrafts, automobiles, industrial machines, and the like. Along with expansion of areas to which the C/C composites are applied and advancement in the application technology, manufacturing C/C composites with better quality at a lower cost has been desired.

Generally, from the aspect of the structure of carbon fibers used as a reinforcing material, C/C composites are largely classified into those using long fibers as a reinforcing material and those using short fibers as a reinforcing material. C/C composites reinforced by long carbon fibers are grouped into UD materials in which the carbon fibers are arranged to uni-dimensional directions; 2D materials prepared by using fabrics made of long carbon fibers, in which the carbon fibers are arranged to two-dimensional directions; and 3D materials prepared by using three-dimensional fabrics made of long carbon fibers, in which the carbon fibers are arranged to three-dimensional directions. C/C composites reinforced by short carbon fibers are distinguished from those reinforced by long carbon fibers in that the short carbon fibers are arranged almost randomly. Regarding the relationship between the forms of carbon fibers and the usage of the C/C composites, those reinforced by long carbon fibers are directed to applications requiring high strength, while those reinforced by short carbon fibers are mostly directed to applications requiring good homogeneity, such as braking materials, sliding materials, heat insulating materials, and the like.

From the aspect of matrix materials used, there are known C/C composites in which various matrix materials are used, for example, pitch or thermosetting resins (e.g., JP-A-62(1987)-252371, JP-A-62(1987)-72566, JP-A-63(1988)-112463, JP-A-1(1989)-160866) and USP 4,975,261; a mixture of pitch and a thermosetting resin (e.g., JP-A-62(1987)-72566, JP-A-1(1989)-188468 and JP-A-1(1989)-79070); and a mixture of pitch, a themosetting resin or its monomer, and an aromatic nitro compound (e.g., JP-A-4(1992)-149069 and JP-A-4(1992)-182355).

In order to manufacture C/C composites reinforced by short carbon fibers with excellent mechanical characteristics, it is important how the short fibers are homogeneously dispersed in the matrix, irrespective of the kind of the matrix material used therein. Development of a process for the manufacture of a preformed material in which short fibers and a matrix material are very homogeneously dispersed is therefore desire.

In conventional process of manufacturing C/C composites reinforced by short carbon fibers, mixtures of fibers and matrix materials are prepared by a dry mixing method in which fibers and matrix materials are mechanically mixed (e.g., JP-A-63(1988)-307163) or by a wet mixing method in which matrix materials are heated to melt and kneaded together with fibers (JP-A-63(1988)-40765, JP-A-63(1988)-123863 and JP-A-63(1988)-123864). The mixtures obtained by these methods of mixing are then heated, molded under an increased pressure, and calcined, followed by repetition of impregnation and calcination for making a material having a high density. This material is finally graphitized.

The dry mixing method requires a mechanical mixing operation over a long period of time in order to achieve dispersion of fibers in matrix to a certain degree of homogeneity. This may cause cutting or breaking of fibers. In addition, fibers may entangle each other and produce blocks of fibers, making it difficult to provide a homogeneous mixture of the fibers and the matrix materials. Further, there are limitations to the types of matrix materials which can be used for the wet mixing method. Materials having a high reactivity which may result in denature or thermosetting when they are heated to melt, or materials having a high melting point or a high softening point cannot be used as matrix in this method. Entanglement of fibers may also take place, because the volume of the molten matrix material which functions as a dispersion medium when they are mixed is generally insufficient for the volume of the fibers. This also makes it difficult for matrix materials and fibers to be dispersed homogeneously. To achieve homogeneity of the materials produced by the wet mixing method, a process was proposed, in which blocks of solidified materials obtained after kneading is pulverized and this pulverized material is used as a molding material (JP-A-63(1988)-40765). This process, however, involves the problem of severe cutting or breakage of fibers.

As a solution to the above problems, JP-A-3(1991)-150266 proposes a process for manufacturing C/C composites by dispersing short fibers and matrix materials in a large quantity of water, making paper-like materials from the mixture by the application of a conventional wet paper-making technique, and laminating the paper-like materials. However, because the paper-like materials produced from a fiber-matrix mixture by this process are extremely thin (normally thinner than 0.5 mm), a large number of sheets must be laminated for manufacturing a C/C composite from the paper-like materials. This is a cause of a low production efficiency. Also, proposed is a process for manufacturing a C/C composite, which comprises dispersing short fibers and a matrix material in water and filtering the dispersed mixture to obtain a molding material for the C/C composite (JP-A-62(1987)-108768). Because the specific gravities of fibers and matrix materials are not necessarily the same and shapes of fibers and matrix materials are significantly different from each other, the matrix material may sediment and separate from fibers during the filtration operation, giving rise to difficulty in producing a homogeneous mixture. Furthermore, since the product obtained by the filtration is very fragile, the state of dispersion of the mixture may be changed depending on the manner in which the material obtained by the filtration is handled. In order to eliminate this problem, proposed are a process wherein the material obtained by the filtration is pulverized after drying for producing a molding material and a process wherein the material obtained by the filtration is kneaded after further addition of a binding material to produce a paste and this paste is molded (JP-A-3(1991)-8769). Although these processes improve the homogeneity of the materials to a certain degree as compared with the case where materials are mixed by the application only of the above-mentioned dry mixing method, they not only make manufacturing processes complex but also entail a problem in that fibers are seriously damaged due to increased mixing operations.

Accordingly, an object of the present invention is to overcome the above-mentioned problems of homogeneous mixing and homogeneous dispersion of short fibers and matrix materials and to provide a simple process for manufacturing a preformed material for a C/C composite reinforced by short fibers, in which short fibers are dispersed in a matrix material extremely homogeneously. Another object of the present invention is to provide the preformed material manufactured by this process.

These objects have been achieved by the surprising finding that a certain specific volume is required for mixing in order to homogeneously disperse short fibers in a matrix material and, if the volume is smaller than this specific volume, entanglement of fibers occurs and prevents the fibers from being homogeneously dispersed. It has further been found that when the materials are mixed by a dry method, the entanglement occurs even if the volume of the mixer is greater than the above specific volume, if the space is occupied by a gas such as air; that if this space is replaced by a liquid, fibers are not entangled; that if this liquid has a large viscosity, the volume required for mixing to achieve homogeneous dispersion, i.e., the volume of this liquid, may be small; and further that if the viscosity of the liquid used for the dispersion exceeds a certain level, the state of dispersion of a fiber-matrix mixture can be maintained even if this dispersion mixture is allowed to stand for a considerably long period of time. Furthermore, it has been found that when a low viscosity dispersion medium having a relatively low boiling point is used together with a viscosity increasing agent for promotion of the viscosity of the liquid to maintain homogeneous dispersion of the materials, even if said dispersion medium is removed by a drying operation, this viscosity increasing agent can still remain and, after drying, acts as a binder, while maintaining the homogeneous dispersed states of the fibers and the matrix, thus producing a preformed material which can be easily handled.

Accordingly, the gists of the present invention firstly reside in a process for the manufacture of a preformed material for making a C/C composite reinforced by short carbon fibers, comprising short carbon fibers, a matrix material, and a viscosity increasing agent which are homogeneously dispersed, which process comprises, stirring and mixing said short carbon fibers and matrix material in a dispersion medium to which said viscosity increasing agent has been added, to obtain a dispersion mixture, molding the dispersion mixture, and drying the molded material to remove the dispersion medium; and secondly reside in a preformed material for making a C/C composite reinforced by short carbon fibers, comprising short carbon fibers, a matrix material and a viscosity increasing agent which are homogeneously dispersed, or further comprising a powdery additive and/or a short fiber additive homogeneously dispersed therein, which is prepared by a process comprising, stirring and mixing said short carbon fibers and matrix material, or a mixture of said short carbon fibers, matrix material and a powdery additive and/or a short fiber additive, in a dispersion medium to which said viscosity increasing agent has been added, to obtain a dispersion mixture, molding the dispersion mixture, and drying the molded material to remove the dispersion medium.

The present invention will be explained in more detail in the following descriptions.

Any carbon fibers, such as PAN-type carbon fibers obtained by rendering infusible, carbonizing or graphitizing polyacrylonitrile fiber; pitch-type carbon fibers obtained by melt-spinning pitch and rendering infusible, carbonizing or graphitizing the spun pitch; vapor-phase-grown carbon fibers which are carbon or graphite fibers grown in vapor phase; carbon or graphite fibers produced from lignin or cellulose can be used. Both pitch-type carbon fibers produced from mesophase pitch and those produced from isotropic pitch can be used. Included also in carbon fibers which can be used are those obtained by merely rendering infusible polyacrylonitrile fibers or spun pitches, or by treating them at a temperature below 1,000°C , i.e., usual carbonizing temperatures. Furthermore, carbon fibers of which the surfaces are oxidatively treated with air, ozone, hydrogen peroxide, or the like or carbon fibers processed by a sizing treatment can be used.

Short fibers used in the present invention are produced by cutting the above-mentioned carbon fibers. If the length of fibers is too short, the reinforcing effects are small so that the characteristics as C/C composites are impaired, although homogeneous dispersion can be easily achieved with such short-length fibers. Contrary, if the length of fibers is too long, it is difficult to achieve homogeneous dispersion, resulting in heterogeneous products with impaired characteristics as C/C composites. Usually, carbon fibers with fiber length of 0.05 - 30 mm are used, with more preferable range being 0.1 - 15 mm.

Given as materials which can be used as matrix are pitches; thermosetting resin materials, e.g., a thermosetting resin, a mixture of a thermosetting resin and hardener and/or a hardening accelerator; thermosetting resin monomeric materials, e.g., a thermosetting resin monomer, a mixture of a thermosetting resin monomer and a hardener and/or a hardening accelerator; and mixtures of a pitch and a thermosetting resin material and/or a thermosetting resin monomeric material. Matrix materials obtained by adding an aromatic nitro compound to said matrix materials for improving the fluidity and carbonization characteristic can also be used.

Included in pitches which can be used are common binder pitches, isotropic and high-softening point pitches used for manufacturing general-purpose carbon fibers, mesophase pitches used for manufacturing high-performance carbon fibers, pitches obtained by a heat treatment of polymeric compounds such as polyvinyl chloride resin or pitches obtained by the polymerization of polycyclic aromatic compounds in the presence of an acid catalyst.

As thermosetting resins or monomers thereof, phenol resin, epoxy resin, polyimide resin, unsaturated polyester resin, furan resin, and the like, as well as their monomers, can be used. They are usually a powder, but may be a liquid or a low polymerized material such as oligomer, if required.

As hardeners or hardening accelerators mentioned above, any conventionally used hardeners or hardening accelerators can be used in the present invention. For example, formaldehyde, paraformaldehyde or hexamethylenetetramine are used for phenol resins or monomers thereof; diaminodiphenylsulfone, p-phenylenediamine or phthalic anhydride are used for epoxy resins or monomers thereof; vinylic monomers such as stylene are used for unsaturated polyester resins or monomers thereof; formaldehyde, paraformaldehyde or hexamethylenetetramine are used as a hardener and/or acid catalysts are used as a hardening accelerator for furan resins or monomers thereof. Concerning with polyimide resins, no hardener and/or hardening accelerator is usually required, but when polyimide resin oligomers or monomers thereof are used as matrix material, aromatic diamines or the like are used as a hardener, if desired.

As aromatic nitro compounds, nitrobenzene, nitroaniline, dinitrobenzene, nitronaphthalene, dinitronaphthalene, dinitroanthracene, trinitrobenzene or trinitrophenol can be used.

Among the above-described matrix materials, preferred are mixtures of pitches, thermosetting resins or monomers of thermosetting resins, and aromatic nitro compounds, as described in JP-A-4(1992)-149069 and JP-A-4(1992)-182355. A preferable proportion of components in these mixtures are 10 - 90 parts by weight of pitches, 10 - 90 parts by weight of thermosetting resins or monomers of thermosetting resins, and 1 - 45 parts by weight of aromatic nitro compounds, with the total sum being 100 parts by weight.

Regarding properties of matrix materials, those giving a high carbonization yield and producing a strong carbon material when calcined are preferred. Generally, materials giving a high carbonization yield have a high melting point or a high softening point so that they are used with difficulty in a conventional wet mixing method in which the materials are heated to melt. In the present invention, however, matrix materials and short fibers can be mixed and dispersed homogeneously, because the matrix materials need not be heated to melt in the process of the present invention. Therefore, matrix materials giving a high carbonization yield can be selected for the present invention without regard to the melting point or the softening point. Furthermore, regarding thermosetting resins or monomers of thermosetting resins which can produce strong carbon materials, there are problems of thermosetting or denature of the materials by heat, if a conventional wet mixing method in which they are heated to melt is employed. This problem does not occur in the present invention in which the matrix materials need not be heated to melt for homogeneously mixing the matrix materials and fibers. Thus, matrix materials having a high reactivity or easily susceptible to denaturing can be used without any difficulty.

A matrix material in the form of powder is usually used for homogeneously mixing short fibers and the matrix material. There are no specific limitations to the diameter of the particles of the powder. Usually, a maximum diameter of 0.3 mm or smaller is acceptable. The matrix material can be easily pulverized using a conventional pulverizer without any specific limitation. This powdery matrix material may be a powder soluble in a dispersion medium.

In conventional manufacturing process of C/C composites, carbon fillers, such as carbon black powder, coke powder, graphite powder or meso-carbon microbeads may be added in order to promote mechanical characteristics. Also, ceramics, such as SiC, TiC, SiO₂, Si₃N₄, Al₂O₃, B₂O₃ or B₄C may be added to improve resistance to oxidation and sliding characteristics. These additives and other additives for improving various characteristics of C/C composites can be used in the present invention as additives in the form of powder or short fibers.

One or more media selected from water and organic solvents having a boiling point of 120°C or below such as alcohols, ketones, halogenated hydrocarbons and aromatic hydrocarbons can be used as a dispersion medium for homogeneous mixing. Examples of these media include methanol and ethanol as alcohols; acetone and methyl ethyl ketone as ketones; methylene chloride as halogenated hydrocarbons; and benzene as aromatic hydrocarbons. Water is a preferred medium if working environmental conditions, safety, and investment economy are taken into account.

Either organic-type or inorganic-type viscosity increasing agents can be used for increasing the viscosity of dispersion medium. Preferable organic-type viscosity increasing agents are those which remain in the preformed material when the dispersion medium has been removed in the manufacture of the preformed material and which decompose and vaporize when the preformed material is calcined. Examples of such viscosity increasing agents are cellulose esters (e.g., methyl cellulose, carboxymethyl cellulose, hydroxypropylmethyl cellulose or hydroxyethyl cellulose, polyorganic acid esters (e.g., polyacrylic acid ester or polymethacrylic acid ester, polyvinyl alcohol, polyethylene oxide, guar gum, alginate, starch, and other natural viscosity increasing agents.

As inorganic-type viscosity increasing agents compounds, those which may change into compounds promoting oxidation resistance by a carbonization or calcination treatment, e.g., those containing silicon or aluminum are desirable. Anhydrous silica-type inorganic viscosity increasing agents, such as smectites and bentonites are given as examples. These anhydrous silica-type inorganic viscosity increasing agents are particularly preferred when the target C/C composite requires oxidation resistance.

In carrying out the present invention, the above-mentioned short carbon fibers, matrix materials, dispersion media, viscosity increasing agents, and, as needed, other additives are first mixed. The amount of viscosity increasing agents to be added when these materials are mixed cannot be generically determined, because this amount may vary depending on the type of viscosity increasing agents. This amount is usually adjusted so as to bring the viscosity of the dispersion medium to the range of 0.1 - 100 Pa.s (100 - 100,000 CP) at normal temperatures. Usually, the addition of viscosity increasing agents in an amount of 0.005 - 0.05 part by weight, preferably 0.01 - 0.03 part by weight, for 1 part by weight of the dispersion medium is sufficient.

Regarding an amount of short carbon fibers relative to a dispersion medium, the use of short carbon fibers in an amount of 0.2 part by volume or smaller for 1 part by volume of a dispersion medium is suitable. If short carbon fibers in an amount greater than this amount is used, fibers entangle between themselves, resulting in heterogeneous dispersion. Even though better dispersion can be achieved with a smaller amount of fibers, too little amount of fibers results in increase in the cost required for removal of the dispersion medium in the drying step. The volume of short carbon fibers used for one volume of a dispersion medium is usually 0.003 - 0.2 part, preferably 0.005 - 0.1 part, and more preferably 0.01 - 0.05 part.

Because matrix materials are easily dispersed in a dispersion medium and act so as to enlarge the volume in which short carbon fibers are dispersed, no special consideration is required for the amount of matrix materials vs. the amount of a dispersion medium. Thus, the amount of matrix materials can be determined based on the ratio of the amount of matrix materials to the amount of short carbon fibers for manufacturing C/C composites with desired characteristics. Specifically, the amount of matrix materials used can be determined from the amount of short carbon fibers added to the dispersion medium and the desired proportion of short carbon fibers in the target C/C composite, and this amount is usually 0.1 - 9 parts by weight, and preferably 0.5 - 4 parts by weight, for 1 part by weight of the amount of short carbon fibers.

Mixing of the above-mentioned short carbon fibers, matrix materials, dispersion media, viscosity increasing agents, and other additives which are optionally added for improving characteristics of C/C composite products can be performed by a conventional mixing method. It can be easily done using a conventional type agitator or mixer, such as Henschel mixer, Eirich mixer, spiral mixer, combi-mix, blender or omni-mixer.

Mixing using these mixers can be done usually under the atmospheric pressure or a reduced pressure. Mixing under the atmospheric pressure, however, may invite mingling of air bubbles by stirring, which not only prevents homogeneous dispersion of the materials but also frequently leave pores in the preformed material after drying. Mixing under a reduced pressure is therefore preferred in order to remove air bubbles and to ensure homogeneous mixing.

Further, mixing can be usually performed at room temperature. This temperature requirement is adapted to mixing of highly reactive matrix materials which may be denatured or may occur thermosetting by heating, or matrix materials with a high melting point or a high softening point. If required, the mixture may be heated while mixing. The heating temperature, however, must be lower than the boiling point of the dispersion medium used. Excessive heating causes the dispersion medium to evaporate, giving rise to necessity of complicated operation and devices. In addition, depending on the type of viscosity increasing agent, heating may change its viscosity and may interfere with its viscosity increasing action. There are no specific limitation to the lower end of the mixing temperature, so long as the temperature is higher than the freezing point of the dispersion medium. Therefore, a mixing temperature of the range 0 - 100°C is usually applicable, and preferably 10 - 80°C is applicable, depending on the types of dispersion media.

The required time for the mixing cannot be generically determined, because it depends on the type and the capacity of the mixer employed, and the amount of materials charged into the mixer. When a mixer having blades rotating at a high speed, such as a Henschel mixer, Eirich mixer, combi-mix or blender, is used, homogeneous mixing can be achieved within a comparatively short period of time. In such a case, usually, a period of time shorter than 10 minutes is sufficient. If the mixing is performed in a short period of time according to the present invention, almost no cutting or breakage of fibers takes place.

The product obtained by the mixing is a mixture in which short carbon fibers, matrix materials, viscosity increasing agents, and other optional additives are homogeneously dispersed. Because the dispersing medium has a high viscosity, the components do not sediment or are not separated even if the mixture is allowed to stand as is. In addition, since these components are kept well dispersed in the high viscosity dispersion medium, the mixture can be molded into desired shapes without altering the state of this dispersion by any optional means such as casting, extrusion or press-rolling.

Drying of the molded articles can be carried out by using a conventional dryer at a temperature higher than the temperature at which the dispersion medium volatilizes. When a matrix material with high reactivity is used, the drying is performed while keeping the temperature below the reaction temperature of the matrix material and under a reduced pressure. By the process of the present invention, because the viscosity increasing agent acts as a temporary binder, a preformed material having a shape almost the same as the original shape can be obtained, even after the dispersion medium used has been removed by evaporation and the like.

In the casting or extrusion molding operation, if the viscosity of the mixture, and the direction and speed to which this mixture flows are suitably controlled, fibers in the mixture can be arranged to the flowing direction. A preformed material with controlled orientation of fibers can be obtained by drying this mixture.

As compared to a cotton-like, very bulky mixture obtained by the conventional dry mixing method, the preformed material of the present invention obtained after drying is usually sponge-like and has a volume of only about 1/10 to 1/5 of that of preformed materials obtained by the conventional dry mixing method. They are very easy to handle, although the hardness may be varied to a certain degree depending on the amount of fibers and viscosity increasing agents added. These preformed materials can be further compressed by a roll or a press to a volume of 1/2 or less of the volume of the preformed material originally formed while maintaining their homogeneity and thus made into uniform preformed materials having an increased fiber content for unit volume of the preformed material. Further, fixed unified preformed material laminates having a volume of 1/2 or less when compared to that of preformed material originally formed can be obtained by compressing stacked preformed material sheets of which the surfaces of each sheet have been wetted with the dispersion medium used or the like, because the viscosity increasing agent wetted with the dispersion medium acts as a paste.

When preformed materials in which fibers are arranged to unidimensional orientation prepared by the casting or extrusion molding are used, laminated preformed materials with a complex fiber orientation can be obtained by arbitrarily designing directions of the lamination.

Any optional method can be adopted for manufacturing C/C composites from said preformed materials or laminated preformed materials. An example of a process commonly known in the art comprises producing preformed materials or laminated preformed materials of desired shapes by cutting or the like, molding them by heating under an increased pressure, calcining the molded articles, and increasing the density thereof by impregnation followed by further calcination, and finally graphitizing them.

Processes for manufacturing C/C composites from preformed materials will be explained in more detail in the following description.

First, preformed materials are molded using any conventionally known molding methods. For example, a preformed material or a laminated preformed material is cut to conform its shape to a mold, put into the mold, and hot-pressed. Another method of manufacturing molded articles may comprise laminating a number of preformed plates as are or fabricating a preformed laminated article in advance, inserting it into metal plates, and heating it under an increased pressure.

According to the process of the present invention, in the case where a mold is used, the filling operation is very efficiently performed and the preformed material is charged while maintaining its homogeneously dispersed conditions, because the preformed material of the present invention not only is very homogeneous but also has a very small volume as compared with mixtures obtained by conventional dry mixing method, and further can maintain the homogeneity in a stable manner.

Furthermore, in the molding of the preformed material, the volumetric fiber content of the target C/C composite can be controlled by adjusting the above-described proportion of short carbon fibers to be incorporated, the number of laminated preformed material sheets, and the pressure by which the mold is pressed. Of course, it is possible to prepare a C/C composite with a controlled volumetric fiber content by adjusting the pressure by which the mold is pressed even when a single thick sheet of the preformed material is used.

Molding conditions of the preformed material can be suitably selected depending on the types of matrix materials. Usually, the molding is performed in an atmosphere of a non-oxidative gas, such as helium, argon, and nitrogen, from normal temperature to 600°C under a pressure of 39.2 MPa (400 kg/cm²) or lower. When molding is carried out at a low temperature, e.g., at 300°C or lower, it is possible to mold in an air atmosphere.

The molded articles obtained by the above molding procedure are then carbonized and calcined in a non-oxidative gas atmosphere. Helium, argon, nitrogen, or the like is used as the non-oxidative gas. The heating is carried out at a temperature increasing rate of 5°C per minute or slower, and preferably at a rate of 2°C per minute or slower, until the temperature rises to a prescribed carbonization and calcination temperature. The carbonization and calcination temperature is 600 - 1,500°C , preferably 600 - 1,000°C , and the calcination time is several hours.

The carbonized and calcined material thus obtained is subjected to an impregnation treatment as required. That is, its density is increased by impregnating the above-mentioned matrix material or its analogous material into the carbonized and calcined material and further carbonizing them at a temperature of 600 - 1,500°C , preferably 600 - 1,000°C . This impregnation-carbonization treatment may be repeated several times as needed.

The carbonized material or the product obtained by increasing its density is then graphitized by the final calcination at a temperature range of 1,800 - 3,000°C , and preferably 2,000 - 2,700°C .

According to the present invention, a mixture of short carbon fibers, a matrix material and, optionally, a powdery or short fiber additive, is stirred and mixed in a dispersion medium, of which the viscosity is controlled by the addition of a viscosity increasing agent, to give a mixture in which short fibers are more homogeneously dispersed and in which fibers suffer breakage or damage only very slightly as compared with mixtures produced by a conventional dry mixing method or a wet mixing method in which the matrix material is kneaded in a hot-melt state. In addition, the short fibers and the matrix material can be held in a stable manner in a state wherein they are homogeneously dispersed by the action of the viscosity increasing agent. Even after the dispersion medium has been removed by drying, this homogeneous dispersed state can be maintained by the remaining viscosity increasing agent. This makes it possible to easily obtain a preformed material for the manufacture of C/C composites in which the short fibers and the matrix material are more homogeneously dispersed. In addition, this preformed material is very easy to handle.

Furthermore, because there are no needs for the short fibers and the matrix material to be heated when they are mixed, it is possible to use matrix materials which are highly reactive or easily denatured with heat. Still further, because it is possible to disperse a powdery matrix material as is, matrix materials which have a high melting point or a high softening point, or matrix materials which are hardly soluble in solvents, can be homogeneously dispersed with ease.

In addition, the present invention can manufacture a preformed material containing homogeneously dispersed short fibers and a matrix material by a process which is more simple than the process disclosed in JP-A-3(1991)-150266 in which the paper-making process is used.

According to the present invention, it can manufacture a preformed material in which short fibers and a matrix material are dispersed more homogeneously, of which the homogeneity can be kept more stably, and which can be handled more easily as compared with a conventional process in which the short fibers and the matrix material are mixed and dispersed in water and the mixture is filtered afterward as disclosed in JP-A-62(1987)-108768.

Further, according to the present invention, it is possible to use matrix materials soluble in a dispersion media such as water. Furthermore, as compared with the process of pulverizing the mixture of short fibers and a matrix material obtained by the filtration and kneading the pulverized material with the addition of a binder as disclosed in JP-A-3(1991)-8769, the process of the present invention is more simplified, and therefore the process of this invention can reduce the damages to the short carbon fibers.

Because the preformed materials for C/C composites obtained by the process of the present invention are materials in which short fibers are homogeneously dispersed and which suffer almost no breakage or damage as mentioned above, it is possible to manufacture C/C composites having a higher mechanical strength, more uniform characteristics, and more stable qualities than those obtained by conventional processes.

Because of this, C/C composites with a higher mechanical strength can be obtained with the same short fiber content as those manufactured by the conventional processes. Thus, it is possible to reduce the amount of short carbon fibers which are an expensive material, and accordingly to lower the manufacturing cost, to achieve a certain level of mechanical strength in the target C/C composite as compared with conventional processes.

The present invention will be illustrated in more detail by way of examples. It is to be noted, however, that the present invention is not limited thereby.

### Example 1

45 parts by weight of coal-derived 100% mesophase pitch (softening point: 303°C , volatile component volatilizable up to 1,000°C : 28 wt.%), 24 parts by weight of bisphenol A, 6 parts by weight of hexamethylenetetramine, and 25 parts by weight of dinitronaphthalene are mixed under dry conditions in a commercial Henschel mixer (SK-M10R type, manufactured by Kyoritsu Riko Co.) for one minute to obtain a powdery matrix material having a particle size of 250 µm or less.

A mixture of 1,000 parts by weight of water as a dispersion medium, 10 parts by weight of commercial methyl cellulose as a viscosity increasing agent [Viscosity of the dispersion medium after the addition of the viscosity increasing agent was 0.8 Pa.s (800 CP) at 25°C .], 76 parts by weight of the powdery matrix material obtained above, and 4 parts by weight of carbon black powder (particle size: 0.022 µm) as other additive was mixed under wet conditions at room temperature under normal pressure for 5 minutes using a commercial blender (HGB-SS type, manufactured by Waring Co.). To the mixture was added 20 parts by weight of PAN-type carbon fiber with a fiber length of 6 mm (fiber diameter: 7 µm, tensile strength: 3,530 MPa (360 kg/mm²), modulus of elasticity: 235 GPa (24 ton/mm²) and the mixture was stirred for 5 minutes. The proportion of the components in the mixture for 1,000 parts by weight of water is shown in Table 1. 555 Grams of this mixture was then charged into a container with a flat smooth bottom of 255 x 340 mm and dried in a dryer while heating at 110°C to obtain a plate-like preformed material with a thickness of 6 mm. This preformed material was a flexible and elastic material and could be easily cut by a cutter or the like.

Next, for preparing a C/C composite, said preformed material was cut out into sheets of 80 x 80 x 6 mm, 12 sheets were stacked and put into metal plates, and a spacer with a thickness of 5 mm was inserted, to mold the preformed material by hot-press. In the molding, the temperature was raised at a rate of 5°C per minute under the atmospheric pressure up to 140°C and then 7.4 MPa (75 kg/cm²) up to 260°C , at which temperature the material was held for 3 hours. The molded article was a plate-like article with a thickness of 5 mm with a smooth surface. It was free from deformation and swelling.

This molded article was subjected to a primary calcination at a temperature of 500°C under a pressure of 4.9 MPa (50 kg/cm²) in a nitrogen gas stream for 2 hours, and then carbonized while heating at a rate of 1°C per minute up to a temperature of 1,000°C under the atmospheric pressure in a nitrogen gas stream in the presence of artificial graphite powder and holding it for one hour at this condition. As a step for increasing the density of the carbonized material, impregnation of coal-derived isotropic pitch (softening point: 250°C , volatile components volatilizable up to 1,000°C : 32 wt.%), and the above-mentioned carbonization-calcination procedure were repeated twice, and, further, as a final calcination step, the material was heated at a rate of 40°C per minute up to 1,000°C and at a rate of 10°C per minute up to 2,000°C under the atmospheric pressure in a nitrogen gas stream, and held at this temperature for 0.5 hour, to obtain a C/C composite of the final calcination temperature of 2,000°C .

The C/C composite thus obtained had a volumetric fiber content (Vf) of 18.4 vol.% and bending strength of 159 MPa (16.2 kg/mm²) as shown in Table 1. Observation of the surface of this C/C composite by optical microscope revealed that all fibers were disintegrated with each fiber being homogeneously and randomly dispersed. Preparation conditions and the properties of the C/C composite thus obtained are also shown in Table 1.

In the following examples and comparative examples, matrix material and carbon black used are exactly the same materials as used in Example 1 described above.

### Comparative Examples 1 and 2

The same powdery matrix material, carbon black powder, and PAN-type carbon fiber as in Example 1 were mixed at the ratio shown in Table 1 for 10 seconds by a dry method in the same Henschel mixer as used in Example 1. These mixture were respectively charged into metal molds in an amount of 40 g (Comparative Example 1) and 48 g (Comparative Example 2) to mold them by hot-press. In the molding, the materials were heated at a rate of 5°C per minute under the atmospheric pressure up to 140°C and then 29.4 MPa (300 kg/cm²) up to 260°C , at which temperature the materials were held for 3 hours, to obtain molded articles of 173 x 33 x 5 mm. These articles were well molded products with a smooth surface.

The primary calcination, carbonization-calcination, the step of increasing the density, and final calcination were performed in the same manner as in Example 1 to obtain C/C composites of the final calcination temperature of 2,000°C .

Preparation conditions and properties of the C/C composites obtained by the above dry mixing method are also shown in Table 1. Observation of the surfaces of these C/C composites by optical microscope confirmed that a part of fibers were oriented in the same direction and there were filaments remaining without being disintegrated.

**Table 1**

| | | Ex.1 | C.Ex.1 | C.Ex.2 |
|---|---|---|---|---|
| Reinforcing Carbon Fiber | | | | |
| Kind | | PAN | PAN | PAN |
| Fiber Length (mm) | | 6.0 | 6.0 | 6.0 |

| Blending Ratio | | | | |
|---|---|---|---|---|
| Carbon Fiber (part by wt.) | | 20.00 | 20.00 | 43.00 |
| Matrix Material (part by wt.) | | 76.00 | 76.00 | 76.00 |
| Additive (Carbon Black) (part by wt.) | | 4.00 | 4.00 | 4.00 |
| Viscosity Increasing Agent (part by wt.) | | MC | - | - |
| | | 10.00 | - | - |

| Preparation Conditions | | | | |
|---|---|---|---|---|
| Mixing | | Wet | Dry | Dry |
| Dispersion Medium (part by wt.) | | Water | Air | Air |
| | | 1000 | - | - |
| Molding | | Metal Plates | Metal Mold | Metal Mold |
| Impregnation (times) | | twice | twice | twice |
| Final Calcination Temperature (°C ) | | 2000 | 2000 | 2000 |

| Properties of C/C Composite | | | | |
|---|---|---|---|---|
| Vf (vol.%) | | 18.4 | 18.4 | 36.6 |
| Bulk Density (g/cm³) | | 1.52 | 1.56 | 1.63 |
| Bending Strength | ( MPa) | 159 | 72 | 137 |
| | (kg/mm²) | 16.2 | 7.3 | 14.0 |
| Ex.: Example C.Ex.: Comparative Example MC: Methyl Cellulose Vf: Volumetric fiber content | | | | |

### Examples 2, 3 and 4

Experiments were carried out by using the same wet mixing method as used in Example 1, except for using PAN-type carbon fiber with a length of 1 mm (Other properties of the fiber were the same as in Example 1.). The proportions of materials used are shown in Table 2. In each Example, 555 g of the mixture was dried with heating at 110°C , to obtain a plate-like preformed material with a thickness of 3 mm, and then this preformed material was cut out into sheets of 120 x 80 x 3 mm, 8 sheets were stacked and put into metal plates, to mold the preformed material by hot-press under the same conditions as in Example 1, to obtain a molded product with a thickness of 5 mm. The primary calcination and the carbonization-calcination were carried out on this molded product in the same manner as in Example 1.

In Example 2, this preformed material was made into a C/C composite of the final calcination temperature of 1,500°C , without conducting the step of increasing the density, but subjecting it to a final calcination by heating it under a nitrogen stream atmosphere at a rate of 40°C per minute up to 1,000°C and at a rate of 10°C per minute up to 1,500°C , and holding it at 1,500°C for 0.5 hour.

In Example 3, a C/C composite of the final calcination temperature of 1,500°C was obtained by conducting the same step of increasing the density as in Example 1 and the final calcination under the same conditions as in Example 2.

In Example 4, a C/C composite of the final calcination temperature of 2,000°C was obtained by conducting the same step of increasing the density and the final calcination under the same conditions as in Example 1. Preparation conditions and properties of the C/C composites thus obtained are also shown in Table 2.

### Example 5

20 Parts by weight of smectite which is an inorganic viscosity increasing agent was added to 1,000 parts by weight of water and the mixture was stirred for 3 hours in the same blender as used in Example 1. To the mixture were added the same powdery matrix material and carbon black powder as used in Example 1, and PAN-type carbon fiber with a fiber length of 1 mm as that used in Example 2, at the ratio shown in Table 2. This mixture was submitted to the same wet mixing method as in Example 1. 560 Grams of the resulting mixture was dried with heating at 110°C , to obtain a plate-like preformed material with a thickness of 3 mm. This preformed material was cut out into sheets of 120 x 80 x 3 mm, 8 sheets were stacked and put into metal plates, to mold the preformed material by hot-press under the same conditions as in Example 1, to obtain a plate-like molded article with a thickness of 5 mm. A C/C composite of the final calcination temperature of 2,000°C was obtained by conducting the same primary calcination, carbonization-calcination, the step of increasing the density, and the final calcination as in Example 1.

Preparation conditions and properties of the C/C composite thus obtained are also given in Table 2.

### Comparative Examples 3, 4 and 5

In each Example, the same dry mixing method as in Comparative Example 1 was carried out, except that the same PAN-type carbon fiber with a length of 1 mm as used in Example 2 was used at ratios shown in Table 2, and 48 g of the mixture was filled in a metal mold and hot-pressed under the same conditions as in Comparative Example 1 to obtain molded article having a size of 173 x 33 x 5 mm. C/C composites were obtained from these molded articles applying the same step of increasing the density and the final calcination under the same conditions as in Example 2 (This experiment is referred to Comparative Example 3.), Example 3 (This experiment is referred to Comparative Example 4.), and Example 4 (This experiment is referred to Comparative Example 5.).

Preparation conditions and properties of the C/C composites thus obtained are also given in Table 2.

**Table 2**

| | | Ex.2 | Ex.3 | Ex.4 | Ex.5 | C.Ex.3 | C.Ex.4 | C.Ex.5 |
|---|---|---|---|---|---|---|---|---|
| Reinforcing Carbon Fiber | | | | | | | | |
| Kind | | PAN | PAN | PAN | PAN | PAN | PAN | PAN |
| Fiber Length (mm) | | 1.0 | 1.0 | 1.0 | 1.0 | 1.0 | 1.0 | 1.0 |

| Blending Ratio | | | | | | | | |
|---|---|---|---|---|---|---|---|---|
| Carbon Fiber (part by wt.) | | 40.00 | 40.00 | 40.00 | 40.00 | 40.00 | 40.00 | 40.00 |
| Matrix Material (part by wt.) | | 57.00 | 57.00 | 57.00 | 57.00 | 57.00 | 57.00 | 57.00 |
| Additive (Carbon Black) (part by wt.) | | 3.00 | 3.00 | 3.00 | 3.00 | 3.00 | 3.00 | 3.00 |
| Viscosity Increasing Agent (part by wt.) | | MC | MC | MC | ST | - | - | - |
| | | 10.00 | 10.00 | 10.00 | 20.00 | - | - | - |

| Preparation Conditions | | | | | | | | |
|---|---|---|---|---|---|---|---|---|
| Mixing | | Wet | Wet | Wet | Wet | Dry | Dry | Dry |
| Dispersion Medium (part by wt.) | | Water | Water | Water | Water | Air | Air | Air |
| | | 1000 | 1000 | 1000 | 1000 | - | - | - |
| Molding | | Metal Plates | Metal Plates | Metal Plates | Metal Plates | Metal Mold | Metal Mold | Metal Mold |
| Impregnation (times) | | non | twice | twice | twice | non | twice | twice |
| Final Calcination Temperature (°C) | | 1500 | 1500 | 2000 | 2000 | 1500 | 1500 | 2000 |

| Properties of C/C Composite | | | | | | | | |
|---|---|---|---|---|---|---|---|---|
| Vf (vol.%) | | 31.6 | 31.0 | 30.7 | 29.7 | 35.8 | 38.9 | 39.6 |
| Bulk Density (g/cm³) | | 1.26 | 1.61 | 1.64 | 1.59 | 1.33 | 1.62 | 1.65 |
| Bending Strength | (MPa) | 100 | 128 | 123 | 108 | 57 | 100 | 97 |
| | (kg/mm²) | 10.2 | 13.1 | 12.5 | 11.0 | 5.8 | 10.2 | 9.9 |
| Ex.: Example C.Ex.: Comparative Example MC: Methyl Cellulose ST: Smectite Vf: Volumetric fiber content | | | | | | | | |

### Comparative Example 6

For 5,000 parts by weight of aqueous solution containing 0.2 wt.% of Nonion (Nonion NS-215; manufactured by Nippon Yushi KK) , the same PAN-type carbon fiber with a fiber length of 1 mm, powdery matrix material, and carbon black powder as used in Example 2 were mixed at the ratio shown in Table 3 and mixed by the same wet mixing method as in Example 1. 500 Grams of the slurry mixture was filtered by suction and dried with heating at 110°C to obtain a disk-like dried product with a diameter of 100 mm and a thickness of 8 mm. This dried product was fragile and disintegration of fibers observed by naked eyes was insufficient. The disk plate was broken into pieces at cut ends when a cutter was applied. Therefore, four plates were stacked as were, inserted into metal plates and molded by hot-press in the same manner as in Example 1 to obtain a molded product with a thickness of 5 mm. The primary calcination, carbonization-calcination, the step of increasing the density, and the final calcination were performed in the same manner as in Example 1 to obtain a C/C composite of the final calcination temperature of 2,000°C .

Preparation conditions and properties of the C/C composite thus obtained are also shown in Table 3.

### Example 6

The same wet mixing method as in Example 1 was carried out, except that PAN-type carbon fiber with a fiber length of 0.16 mm (Other fiber properties were the same as that used in Example 1.) was used. The proportions of the materials used are shown in Table 3. 580 Grams of the mixture was dried with heating at 110°C to obtain a plate-like preformed material with a thickness of 4.5 mm. This dried preformed material was cut out into sheets of 120 x 80 x 4.5 mm, seven sheets were stacked, inserted into metal plates, and molded by hot-press in the same manner as in Example 1, to obtain a molded product with a thickness of 5 mm. The primary calcination, carbonization-calcination, the step of increasing the density, and the final calcination were performed in the same manner and under the same conditions as in Example 1, to obtain a C/C composite of the final calcination temperature of 2,000°C .

Preparation conditions and properties of the C/C composite thus obtained are also shown in Table 3.

### Comparative Example 7

The same dry mixing method as in Comparative Example 1 was carried out using components at the ratio shown in Table 3, except that PAN-type carbon fiber used in Example 6 with a fiber length of 0.16 mm was used. 48 Grams of this mixture was filled in a metal mold and hot-pressed under the same conditions as in Comparative Example 1 to obtain a molded article having a size of 173 x 33 x 5 mm. A C/C composite of the final calcination temperature of 2,000°C was obtained by conducting the same primary calcination, carbonization-calcination, the step of increasing the density, and the final calcination as in Example 1.

Preparation conditions and properties of the C/C composite thus obtained are also given in Table 3.

### Example 7

The same wet mixing method as in Example 1 was carried out using components at the ratio shown in Table 3, except that PAN-type carbon fiber with a length of 6 mm (fiber diamter: 10.5 µm, tensile strength: 2,450 MPa (250 kg/mm², modulus of elasticity: 147 GPa (15 ton/mm²) was used. 555 Grams of this mixture was dried with heating at 110°C to obtain a plate-like preformed material with a thickness of 3 mm. This preformed material was cut out into sheets of 80 x 80 x 3 mm, 12 sheets were stacked and put into metal plates and hot-pressed under the same conditions as in Example 1, to obtain a molded article with a thickness of 5 mm. A C/C composite of the final calcination temperature of 2,000°C was obtained by conducting the same primary calcination, carbonization-calcination, the step of increasing the density, and the final calcination under the same conditions as in Example 1.

Preparation conditions and properties of the C/C composite thus obtained are also given in Table 3.

### Comparative Example 8

The same dry mixing method as in Comparative Example 1 was carried out using components at the ratio shown in Table 3, except that the same pitch-type carbon fiber with a length of 6 mm as in Example 7 was used. 40 Grams of this mixture was filled in a metal mold and hot-pressed in the same manner as in Comparative Example 1, to obtain a molded article having a size of 173 x 33 x 5 mm. A C/C composite of the final calcination temperature of 2,000°C was obtained by conducting the same primary calcination, carbonization-calcination, the step of increasing the density, and the final calcination under the same conditions as in Example 1.

Preparation conditions and properties of the C/C composite thus obtained are also given in Table 3.

### Example 8

Into 1,000 parts by weight of water as a dispersion medium, same powdery matrix material, carbon black and a viscosity increasing agent (methyl cellulose) used in Example 1 were added at the ratio shown in Table 3, and wet mixing was carried out for 1 minute at room temperature under a pressure of 50 HPa by using a commercially available mixer operable under a reduced pressure [Robot Coupe, R-10Vac. manufactured by FMI (Food Machines International)]. Then, the pressure of the mixer was changed to the atmospheric pressure for a while, and PAN-type carbon fibers as used in Example 1 were added to the mixture at the ratio shown in Table 3 and then wet mixing was carried out again at room temperature for 4 minutes under a pressure of 50 HPa.

555 Grams of the mixture was dried with heating as in Example 1 to obtain a plate-like preformed material with a thickness of 5 mm.

The preformed material thus obtained was a preformed material having essentially no bubbles in contradistinction to those obtained by wet mixing under normal pressure, and in the preformed material thus obtained, carbon fibers were well dispersed and disintegrated. The reason for such excellent preformed material being formed is considered that by the operation under a reduced pressure, inclusion of air bubbles which tends to interfere uniform mixing can effectively be avoided.

This dried preformed material was cut out into sheets of 80 x 80 x 5 mm, 12 sheets were stacked, and the molding, primary calcination, carbonization-calcination, the step of increasing the density and the final calcination were performed in the same manner and under the same conditions as in Example 1, to obtain a C/C composite of the final calcination temperature of 2,000°C .

Preparation conditions and physical properties of the C/C composite obtained by the wet mixing under a reduced pressure are also shown in Table 3.

**Table 3**

| | | C.Ex.6 | Ex.6 | C.Ex.7 | Ex.7 | C.Ex.8 | Ex.8 |
|---|---|---|---|---|---|---|---|
| Reinforcing Carbon Fiber | | | | | | | |
| Kind | | PAN | PAN | PAN | pitch | pitch | PAN |
| Fiber Length (mm) | | 1.0 | 0.16 | 0.16 | 6.0 | 6.0 | 6.0 |

| Blending Ratio | | | | | | | |
|---|---|---|---|---|---|---|---|
| Carbon Fiber (part by wt.) | | 40.00 | 60.00 | 60.00 | 30.00 | 30.00 | 20.00 |
| Matrix Material (part by wt.) | | 57.00 | 85.50 | 85.50 | 66.50 | 66.50 | 76.00 |
| Additive (Carbon Black) (part by wt.) | | 3.00 | 4.50 | 4.50 | 3.50 | 3.50 | 4.00 |
| Viscosity Increasing Agent (part by wt.) | | - | MC | - | MC | - | MC |
| | | - | 10.00 | - | 10.00 | - | 10.00 |

| Preparation Conditions | | | | | | | |
|---|---|---|---|---|---|---|---|
| Mixing | | WF | Wet | Dry | Wet | Dry | WR |
| Dispersion Medium (part by wt.) | | Water | Water | Air | Water | Air | Water |
| | | 5000 | 1000 | - | 1000 | - | 1000 |
| Molding | | Metal Plates | Metal Plates | Metal Mold | Metal Plates | Metal Mold | Metal Plates |
| Impregnation (times) | | twice | twice | twice | twice | twice | twice |
| Final Calcination Temperature (°C) | | 2000 | 2000 | 2000 | 2000 | 2000 | 2000 |

| Properties of C/C Composite | | | | | | | |
|---|---|---|---|---|---|---|---|
| Vf (vol.%) | | 27.3 | 27.5 | 39.1 | 27.6 | 26.6 | 19.0 |
| Bulk Density (g/cm³) | | 1.52 | 1.52 | 1.56 | 1.65 | 1.66 | 1.55 |
| Bending Strength | ( MPa) | 85 | 104 | 75 | 80 | 55 | 160 |
| | (kg/mm²) | 8.7 | 10.6 | 7.6 | 8.2 | 5.6 | 16.3 |
| Ex.: Example C.Ex.: Comparative Example MC: Methyl Cellulose Vf: Volumetric fiber content WF: Wet mixing and then filtered WR: Wet mixing under a reduced pressure | | | | | | | |

## Claims

1. A process for the manufacture of a preformed material for making a C/C composite reinforced by short carbon fibers, comprising short carbon fibers, a matrix material and a viscosity increasing agent which are homogeneously dispersed, which process comprises,
stirring and mixing said short carbon fibers and matrix material in a dispersion medium to which said viscosity increasing agent has been added, to obtain a dispersion mixture,
molding the dispersion mixture, and
drying the molded material to remove the dispersion medium.

2. The process as defined in Claim 1, wherein the amount of said viscosity increasing agent to be added is 0.005 - 0.05 part by weight for 1 part by weight of said dispersion medium.

3. The process as defined in Claim 1 or 2, wherein said mixing of said short carbon fibers and said matrix material in the dispersion medium to which said viscosity increasing agent has been added is carried out at a temperature above the freezing point and below the boiling point of the dispersion medium.

4. The process as defined in any one of Claims 1 to 3, wherein said mixing of said short carbon fibers and said matrix material in the dispersion medium to which said viscosity increasing agent has been added is carried out under a reduced pressure.

5. The process as defined in any one of Claims 1 to 4, wherein said dispersion medium to which the viscosity increasing agent has been added has a viscosity of 0.1 - 100 Pa.s (100 - 100,000 CP) at normal temperatures.

6. The process as defined in any one of Claims 1 to 5, wherein said viscosity increasing agent is selected from organic-type viscosity increasing agents and inorganic-type viscosity increasing agents.

7. The process as defined in Claim 6, wherein said organic-type viscosity increasing agent is selected from cellulose esters, polyorganic acid esters, polyvinyl alcohol, polyethylene oxide, guar gum, alginate and starch, and said inorganic-type viscosity increasing agent is an anhydrous silica-type compound.

8. The process as defined in any one of Claims 1 to 7, wherein said dispersion medium is one or more dispersion media which is either (a) water or (b) an organic solvent having a boiling point of 120°C or below selected from the group consisting of alcohols, ketones, halogenated hydrocarbons and aromatic hydrocarbons.

9. The process as defined in any one of Claims 1 to 8, wherein the length of said short carbon fibers is 0.05 - 30 mm.

10. The process as defined in any one of Claims 1 to 9, wherein the amount of said short carbon fibers is 0.003 - 0.2 part by volume for 1 part by volume of said dispersion medium.

11. The process as defined in any one of Claims 1 to 10, wherein said matrix material is one or more matrix materials selected from pitches, thermosetting resin materials which are thermosetting resins or a mixture of a thermosetting resin and a hardener and/or a hardening accelerator, thermosetting resin monomeric materials which are thermosetting resin monomers and a mixture of a thermosetting resin monomer and a hardener and/or a hardening accelerator; and a mixture obtained by adding an aromatic nitro compound to the above-described materials.

12. The process as defined in any one of Claims 1 to 11, wherein the amount of the matrix material used is 0.1 - 9 parts by weight for 1 part by weight of the carbon fibers.

13. The process as defined in any one of Claims 1 to 12, wherein said mixing of the short carbon fibers and the matrix material in the dispersion medium to which said viscosity increasing agent has been added is carried out by the further addition of a powdery additive and/or a short fiber additive.

14. A preformed material for making a C/C composite reinforced by short carbon fibers, comprising short carbon fibers, a matrix material and a viscosity increasing agent which are homogeneously dispersed, or further comprising a powdery additive and/or a short fiber additive homogeneously dispersed therein, which is obtainable by a process comprising,
stirring and mixing said short carbon fibers and matrix material, or a mixture of said short carbon fibers, matrix material and a powdery additive and/or a short fiber additive, in a dispersion medium to which said viscosity increasing agent has been added, to obtain a dispersion mixture,
molding the dispersion mixture, and
drying the molded material to remove the dispersion medium.
